# FASCICULE DE BREVET EUROPEEN

(11) **EP 2 367 683 B1**
(45) Date de publication et mention de la délivrance du brevet: **09.10.2013**
(21) Numéro de dépôt: 09775213.3
(22) Date de dépôt: 17.12.2009
(51) Int. Cl.: B32B 17/06, C03C 27/12, E06B 5/16, B63B 19/02

(54) **VITRAGE ANTI-FEU**
BRANDSCHUTZVERGLASUNG
Fireproof glazing

(30) Priorité: 18.12.2008 EP 08172084
(43) Date de publication de la demande: 28.09.2011
(73) Titulaire: AGC Glass Europe, 1170 Bruxelles (Watermael-Boitsfort) (BE)
(72) Inventeur: GOELFF, Pierre, 6040 Jumet (BE); JORDAN, Eric, 6040 Jumet (BE)
(74) Mandataire: Le Vaguerèse, Sylvain Jacques
(86) Numéro de dépôt international: PCT/EP2009/067383
(87) Numéro de publication internationale: WO 2010/070036

(56) Documents cités:
- EP-A- 0 079 257
- EP-A- 1 961 555
- EP-A- 1 997 622
- WO-A-2007/107541
- FR-A- 2 394 394
- FR-A- 2 512 008
- FR-A- 2 541 359
- FR-A- 2 601 943

## Description

La présente invention concerne les vitrages anti-feu transparents comprenant au moins une couche de silicate alcalin hydraté. Dans ces vitrages deux types se distinguent à la fois dans leur préparation et dans leur propriétés.

Le premier type concerne les vitrages comprenant au moins une couche de silicate alcalin hydraté qui est formée par séchage. Cette couche est éventuellement séchée directement sur une feuille de verre, puis assemblée avec une seconde feuille de verre. Les vitrages de ce type sont avantageusement assemblés à chaud, à l'autoclave sous vide ou par calandrage à chaud, ou encore en combinant plusieurs de ces opérations. Dans tous les cas la nature et les conditions de ces opérations, permettent l'utilisation de simple verre recuit. Un avantage de l'utilisation de ces verres recuits est de laisser toute latitude pour les mises à dimension de ces vitrages en fonction des applications considérées.

Dans l'épreuve au feu l'élévation de température de la couche de silicate conduit à la formation d'une mousse réfractaire qui reste ferme. La feuille de verre directement exposée se brise sous l'effet du choc thermique. Eventuellement des morceaux de cette feuille peuvent se détacher mais la couche intumescente protège la seconde feuille de verre, assurant l'étanchéité requise.

Dans le second type de vitrages anti-feu le silicate alcalin hydraté se présente lors de la fabrication sous forme d'une composition fluide qui peut se solidifier sans séchage. Le plus couramment, le vitrage est constitué par deux feuilles de verre maintenues à distance l'une de l'autre au moyen d'un espaceur situé à la périphérie des feuilles, et délimitant avec celles-ci un espace clos étanche dans lequel la composition de silicate est coulée. Une fois la composition introduite entre les feuilles le durcissement intervient en un temps d'autant plus court que la température est maintenue supérieure à la température ambiante et que toutes choses égales par ailleurs la composition présente une teneur en eau plus réduite.

Les compositions de silicate utilisées pour ce second type de vitrage ont une teneur en eau sensiblement plus forte que celles produites par séchage. A l'épreuve du feu ces compositions n'ont pas le même comportement. Elles s'expansent sous forme de mousses qui, dans les produits antérieurs, ont tendance à fluer. Pour conserver une protection contre le feu significative, les feuilles de verre utilisées doivent présenter une résistance au choc thermique plus importante que celle requise pour les produits à teneur en eau plus limitée. De cette façon la couche intumescente est maintenue en position au cours de son expansion.

L'accroissement de la résistance au choc thermique résulte de l'utilisation de feuilles de verre trempées. L'inconvénient propre de ces feuilles est qu'il n'est pas possible de les découper. II est nécessaire de produire les feuilles aux dimensions qui sont celles d'utilisation.

Les vitrages de ce second type sont utilisés depuis longtemps, néanmoins leurs performances sont pour beaucoup liées à la résistance des feuilles de verre utilisées. Celles-ci sont soumises à des chocs thermiques importants qui tiennent à ce que les deux faces des feuilles dans une épreuve au feu se trouvent à des températures très différentes. La face au contact de la composition de silicate demeure à température voisine de celle d'évaporation de l'eau contenue dans le silicate. Cette température est de l'ordre d'une centaine de degrés. L'autre face, par hypothèse exposée au feu, peut atteindre rapidement plusieurs centaines de degrés. A ces contraintes thermiques s'ajoute celle de la pression de la vapeur dégagée par l'échauffement du silicate.

Avec des feuilles de verre trempées le bris de la feuille intervient après un temps supérieur à celui atteint par les verres non-trempés, néanmoins ce délai reste relativement limité. Pour ces raisons lorsqu'une protection plus longue est requise, les vitrages utilisés antérieurement sont constitués d'un ensemble plus complexe comprenant plusieurs couches intumescentes séparées par des feuilles de verre supplémentaires. Ce type de structure permet de retarder la rupture complète du vitrage, chaque couche et chaque feuille de verre participant successivement au processus de protection.

Ces structures à l'évidence sont peu économiques.

Les vitrages du second type sont utilisés notamment dans la composition de vitrages dits "maritimes". Ces vitrages associent à l'ensemble anti-feu décrit précédemment, une feuille de verre de forte épaisseur, dite feuille de "pression", qui confère une résistance mécanique élevée. Cette feuille de verre se trouve directement exposée aux conditions extérieures. Elle est maintenue à distance de l'ensemble comprenant les couches de silicates.

Les vitrages "maritimes" sont de deux types qui correspondent à des exigences particulières correspondant à l'utilisation envisagée. La classe de produit est A0 lorsqu'il s'agit de navires destinés au transport de passagers. La classe A60 concerne les navires utilisés pour les marchandises et en particulier pour les navires pétroliers. Les épreuves auxquelles doivent satisfaire ces deux types sont bien différenciées.

Pour le type A0, dans l'épreuve de résistance le feu est situé à l'intérieur du navire. L'épreuve est réussie lorsque l'étanchéité du vitrage est conservée pendant au moins 60 minutes. Ni les flammes ni les fumées ne s'échappent pendant cette période. Pour le type A60, le feu est situé à l'extérieur du navire. Le vitrage doit maintenir l'étanchéité et l'isolation contre le rayonnement thermique pendant au moins 60 minutes. L'isolation thermique est mesurée par la température de la face de la feuille la plus éloignée du feu.

L'exigence de résistance au feu pour les vitrages A0 est ordinairement satisfaite par une structure comprenant en plus de la feuille de verre de "pression" un vitrage constitué de deux feuilles de verre trempées enfermant une couche intumescente formée par durcissement sans séchage d'une composition de silicate. Même si la couche intumescente est rapidement exposée au feu et par suite est amenée à fluer, cette modification de la protection résultant du fluage du matériau intumescent intervient suffisamment lentement pour que le temps de protection limité recherché soit atteint.

Lorsque l'apparition du feu peut se faire du côté extérieur, les vitrages maritimes doivent répondre aux exigences de la classification dite "A60". Dans ce cas la feuille de pression supporte le premier choc thermique.

En dépit de son épaisseur la feuille de pression est encore détruite après quelques minutes laissant la structure comportant le matériau intumescent directement exposé au feu. Pour résister le temps nécessaire, les produits utilisés à l'heure actuelle comportent un ensemble formé de trois feuilles de verre et de deux couches intumescentes.

Les inventeurs ont établi que par un choix approprié de la composition du matériau intumescent, il est possible de faire en sorte que soumis à une élévation sensible de la température l'expansion se produise sous forme d'une mousse qui ne donne pas lieu à fluage, ou que le fluage n'intervienne que de façon extrêmement limitée, de telle sorte que les propriétés de protection qu'il s'agisse de l'étanchéité ou de l'isolation contre le rayonnement thermique soit sensiblement améliorées.

Pour parvenir à ce résultat avec des compositions de silicates alcalins qui se solidifient spontanément sans séchage, les inventeurs proposent de partir de compositions de silicates dont la teneur en eau ne dépasse pas 43% en poids d'eau, et de préférence ne dépasse pas 40%.

Il apparaît à l'expérience que les couches intumescentes fluent d'autant plus facilement à la chaleur que pour un même rapport molaire silice/ oxyde alcalin, leur teneur en eau est plus élevée. Mais la réduction de la teneur en eau, toutes choses égales par ailleurs, conduit à une réduction du délai d'utilisation des compositions ("pot life"), autrement dit du temps qui sépare la préparation de cette composition de sa prise en masse spontanée. Pour des teneurs en eau très limitées la prise en masse peut devenir pratiquement instantanée rendant impraticable la mise en place de la composition entre les feuilles de verre.

Par ailleurs dans une demande antérieure la demanderesse (WO 2007/107541) a fait état de caractéristiques qui sont susceptibles d'influencer la durée d'utilisation en dehors de celle concernant la teneur en eau. Intervient en particulier le rapport molaire silice/oxyde alcalin de la composition. La stabilité des compositions pour une teneur en eau déterminée est d'autant plus aisée que le rapport molaire est moins élevé. Néanmoins il n'est pas souhaitable d'opérer avec des compositions à faible rapport molaire qui permettraient de réduire la teneur en eau, dans la mesure où le caractère "réfractaire", autrement dit les propriétés anti-feu, dépendent aussi de ce rapport molaire. Pour cette raison encore, le choix, lorsqu'il est possible, est donc d'avoir un rapport molaire relativement élevé et d'ajuster le plus possible la teneur en eau pour maintenir la fluidité de la composition lors de sa mise en oeuvre d'une part, et d'autre part de faire en sorte que dans l'exposition au feu la composition n'ait pas tendance à fluer.

Une voie pour parvenir à concilier ces diverses exigences, sans modifier la composition élémentaire de la couche, est de choisir les matériaux constituant cette composition de telle sorte que la prise en masse ne soit pas trop rapide. Autrement dit la formation du gel de poly-silicates est au moins en partie contrôlée. Dans ce sens la demande antérieure EP 199 76 22, provenant aussi de la demanderesse, offre une solution. Selon cette demande le contrôle de la stabilité de la composition pour des teneurs en eau limitées peut être réalisé en choisissant de préparer la composition avec une part important de la silice introduite sous forme de suspension de silice colloïdale dont les particules présentent des dimensions déterminées. En pratique, pour que l'effet "retard" sur la prise en masse réponde aux besoins de l'utilisation considérée, les particules de silice doivent présenter une granulométrie moyenne qui est supérieure à 40nm et de préférence supérieure à 50nm. Il est encore important que la dispersion des dimensions soit limitée. Avantageusement comme souligné dans la demande précitée, 80% en poids des particules se situent de préférence dans l'intervalle de ±10% du diamètre moyen. Pour obtenir l'effet recherché la part de la silice présentant ces dimensions est au moins 50% de la silice totale présente dans la composition. Si ces particules de silice doivent être relativement volumineuses pour ralentir la maturation de la composition, leur dimensions doivent rester dans la limite qui ne perturbe pas la transparence du vitrage final, des particules trop importantes ayant éventuellement pour conséquence de produire un effet de diffusion de la lumière. Avantageusement les dimensions moyennes des particules de silice utilisées ne dépassent pas 130nm.

A ces conditions les compositions de silicates alcalins hydratés peuvent présenter simultanément des teneurs en eau limitée et un rapport molaire silice/oxyde alcalin relativement élevé, en offrant une durée d'utilisation compatible avec la mise en oeuvre de ces compositions dans les vitrages anti-feu considérés. Ces compositions peuvent être conservées plusieurs heures sans prendre en masse, et même plusieurs jours lorsqu'elles sont conservées à faible température (de l'ordre de 4°C).

Des compositions typiques sont par exemple constituées avec un rapport molaire de 3,5 à 6, une teneur en eau de l'ordre de 35 à 43% en poids, avec de la silice composée pour 50% au moins à partir de suspension de silice colloïdale dont les particules ont un diamètre moyen par exemple de l'ordre de 70nm.

Le détail de la préparation de ces compositions est donné dans la demande antérieure incorporée ici par référence.

Un problème complémentaire est apparu à l'usage des compositions de silicate se solidifiant sans séchage, particulièrement lorsque ces compositions présentent une teneur en eau du type de celles mises en oeuvre antérieurement pour les raisons suivantes.

Pour les vitrages comprenant des feuilles trempées et ces compositions, il est nécessaire que lors de l'exposition au feu que la feuille de verre exposée en premier soit aussi celle dont la rupture intervient en premier. A l'expérience l'inverse se produit parfois. Quelle qu'en soit la raison ce comportement fait perdre au vitrage tout effet protecteur. La rupture du verre situé derrière la couche intumescente par rapport au feu ne permet pas de maintenir la protection suffisamment longtemps du fait que, indépendamment de cette première rupture, la feuille directement exposée et pour cette raison soumise au choc thermique le plus violent, ne résiste ordinairement que quelques minutes. Lorsque cette seconde feuille se rompt la couche intumescente n'est plus maintenue et l'ensemble s'effondre.

Les raisons qui peuvent conduire à la rupture de la feuille non directement exposée peuvent être multiples. Même si cette feuille ne subit pas immédiatement un violent choc thermique, l'évaporation de l'eau de la couche intumescente introduit dans cette structure feuilletée des pressions importantes qui s'exercent sur les deux feuilles. Même lorsque les deux feuilles de verre présentent en principe les mêmes caractéristiques notamment de composition, d'épaisseur et de trempe, leur comportement sous ces contraintes n'est pas nécessairement le même. Des éléments qui ne sont pas parfaitement maîtrisables peuvent fragiliser l'une d'entre elles par rapport à l'autre. Ces différences sont pour beaucoup liées à des défauts tels que des microfissures présentes notamment sur les bords des feuilles de verre. De tels défauts suffisent le cas échéant pour que la feuille non directement exposée au feu se rompe en premier avec les conséquences indiquées plus haut.

Selon l'invention il est donc souhaitable de faire en sorte que systématiquement la feuille exposée au feu en premier soit aussi la première à se rompre libérant de ce fait les contraintes liées à la pression de vapeur, et par suite conduisant au maintien de la seconde feuille et donc au support de la couche intumescente.

L'utilisation de vitrages anti-feu présentant des feuilles de verre de résistance au choc thermique apparait dans la publication FR 2 394 394 pour des structures particulières comprenant un intercalaire de silicone.

Pour prévenir les accidents de ce type dans le cas des vitrages anti-feu comprenant des feuilles de verre trempées, il est prévu selon l'invention de faire en sorte que la feuille de verre exposée au feu soit systématiquement la plus "fragile", autrement dit celle qui se rompt en premier.

Pour parvenir à ce résultat selon l'invention on joue notamment de plusieurs facteurs : l'épaisseur de la feuille, les contraintes de trempe et la qualité de finition des bords.

Par principe à contraintes égales, la résistance est fonction de l'épaisseur des feuilles, les plus épaisses étant aussi les plus résistantes. L'épaisseur est cependant un facteur qui n'est pas toujours utilisé lorsqu'il est préférable notamment de ne pas alourdir le vitrage. Dans ce cas le jeu de contraintes différentes introduites au cours de la trempe est une manière de différencier la résistance.

Selon l'invention on établit en conséquence une différence de contraintes entre les feuilles, différence qui n'est pas de moins de 10% du niveau de contrainte le plus bas, et/ou on utilise des feuilles dont les épaisseurs diffèrent d'au moins 15% de la feuille la moins épaisse. De préférence la différence de contraintes entre les deux feuilles est d'au moins 20% et peut dépasser 30%. De la même façon des différences d'épaisseur entre les feuilles sont de préférence d'au moins 20% et peuvent dépasser 30%.

En valeurs absolues les différences de contraintes entre les deux feuilles d'un même vitrage de part et d'autre de la couche intumescente sont au moins de 10MPa et de préférence d'au moins 20MPa.

Dans les considérations précédentes, l'hypothèse est que les feuilles de verre ne comportent pas de défauts qui rendraient sans effet les différences introduites. En particulier les feuilles sont exemptes de micro-défauts sur les bords dont on sait qu'ils ont un rôle important dans l'initiation des ruptures. Il est possible en plus des mesures précédentes ou se substituant à celles-ci de jouer de différences dans le mode de finition des bords des feuilles de verre. Les bords de la feuille de verre devant être la plus fragile est par exemple laissée brut de découpe ou à arêtes abattues, les bords de celle devant présenter une meilleure résistance sont soit rodés mat soit polis pour éliminer autant que possible toute amorce de rupture.

L'invention est décrite dans la suite de la description à l'aide d'exemples et en faisant référence aux planches de dessins dans lesquelles :
- la figure 1 est une représentation schématique en coupe d'un vitrage "maritime" de classe A0 ;
- la figure 2 est une représentation schématique en coupe d'un vitrage "maritime" de l'art antérieur, de classe A60 ;
- la figure 3 est une représentation schématique en coupe d'un vitrage "maritime" selon l'invention de classe A60.

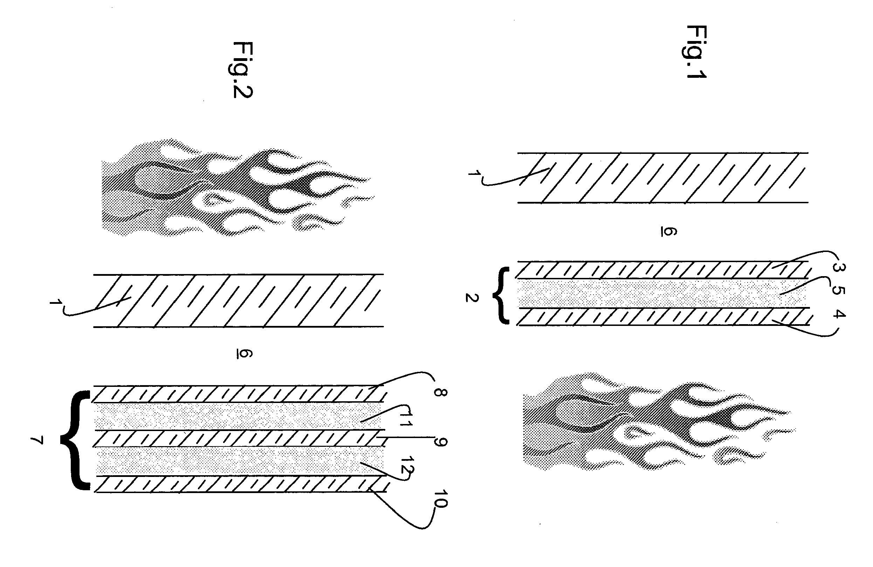

Le vitrage présenté à la figure 1, de type "maritime", comprend une feuille de verre de "pression" 1, tournée vers l'extérieur. Cette feuille traditionnellement est relativement épaisse pour supporter les efforts mécaniques dans ce type d'utilisation. Des épaisseurs de 8 à 25mm sont usuelles. Les feuilles en question sont trempées pour leur conférer la résistance la plus élevée possible. Distante de cette première feuille, un ensemble feuilleté 2 comprend deux feuilles de verre 3 et 4 et une couche d'un silicate alcalin solide et transparent 5 entre ces deux feuilles.

Dans la représentation de la figure 1 les feuilles 3 et 4 sont présentées comme identiques.

Le verre de pression 1 est séparé de l'ensemble 2 par un espace qui contribue aux propriétés isolantes thermiques du vitrage. La structure est maintenue dans un cadre non représenté.

De façon schématique, pour illustrer le fait que ce vitrage est du type A0, la représentation du feu est située du côté de l'intérieur c'est-à-dire du côté de l'ensemble feuilleté 2. Dans cette configuration lors d'une épreuve au feu la feuille 4 est la première soumise au choc thermique. Sa résistance est limitée. Elle se rompt rapidement sous l'effet du choc thermique. La couche intumescente 5 est directement exposée au feu et s'expanse rapidement protégeant momentanément la feuille 3.

La couche expansée dans les produits antérieurs relativement riches en eau flue lentement et la protection de la feuille 3 décroît jusqu'à ce qu'elle se rompe à son tour. La feuille de pression est alors elle-même soumise au choc thermique et finit par se rompre.

Le processus conduisant à la rupture de l'ensemble 2, sans être très long est suffisant pour que le vitrage atteigne le temps requis pour la classe A0.

Lorsqu'on utilise une couche intumescente répondant aux conditions de l'invention la couche intumescente reste beaucoup plus stable. Elle protège sensiblement plus longuement la feuille de verre 3. La durée de protection globale en est aussi accrue.

A titre indicatif deux ensembles 2 sont constitués de manière identique avec deux feuilles de verre de 6mm d'épaisseur chacune, et d'une couche de silicates de potassium hydraté avec un rapport molaire de 4,6, une teneur en éthylène glycol de 4% en poids, et 1% en poids d'hydroxy tétraméthyl ammonium. Ces deux ensembles se distinguent par des teneurs en eau différentes. L'un comporte une teneur en eau de 51% en poids, l'autre une teneur de 38%. Dans l'épreuve au feu on détermine le temps pour que la face de la feuille 3, non directement exposée, atteigne la température de 140°C. Pour la composition la plus riche en eau le temps mesuré est de 40 minutes. Pour la composition utilisée dans l'ensemble 2 dont la composition intumescente est selon l'invention, ce temps est de 63 minutes. Ceci montre à l'évidence l'importance d'utiliser des couches qui ne fluent pas. Le résultat est d'autant plus remarquable que la teneur en eau participe à la protection. L'évaporation de l'eau contenue dans le silicate est la première contribution du silicate à la protection contre l'élévation de la température des feuilles de verre. En pratique on constate que la différence introduite par la diminution de la teneur en eau, n'est pas préjudiciable à l'effet global. Le maintien de la couche intumescente, et son effet "réfractaire" s'avère plus important.

Le déroulement du processus décrit précédemment à propos de l'épreuve au feu du vitrage de la figure 1 peut être perturbé si la feuille 3 se rompt avant la feuille 4 et ceci que la composition intumescente soit riche en eau ou non.

Dans l'hypothèse où, quelle qu'en soit la raison, la feuille 4 se rompt la première, sous l'effet principalement de la pression de la vapeur dans l'ensemble 2, la protection recherchée n'est plus normalement atteinte.

Il va de soi que le développement de la pression est d'autant facilité que la teneur en eau de la couche 5 est plus importante. Mais les causes de la rupture de la feuille 4 sont aussi liées à des défauts présents dans cette feuille, défauts qui ne peuvent pas toujours être décelés et/ou évités lors de la fabrication ou de l'installation de cet ensemble dans le cadre.

Lorsqu'accidentellement la feuille 4 est la première à se briser l'ensemble 2 ne peut pas jouer convenablement son rôle dans la mesure où les contraintes thermiques auxquelles la feuille 3 est exposée conduisent rapidement à la rupture de cette feuille qui entraîne avec elle la couche intumescente dont la structure n'est pas suffisamment résistante pour s'auto-supporter.

La séquence dans laquelle la rupture de la feuille 3 intervient après celle de la feuille 4, doit impérativement se produire. Pour parvenir à ce résultat, l'invention propose donc de différencier les résistances des feuilles 3 et 4. La feuille 4 doit être sensiblement moins résistante aux contraintes mécaniques que la feuille 3. Cette différence de résistance est obtenue selon l'invention soit par une différence dans l'état des contraintes de ces feuilles trempées, soit par une différence d'épaisseur, soit encore par un traitement des bords approprié, soit par une combinaison de ces moyens.

A titre indicatif un vitrage "maritime" de classe A0 selon l'invention est constitué d'une feuille de pression trempée de 10mm d'épaisseur et d'un ensemble comprenant deux feuilles de verre trempé chacune de 6mm d'épaisseur enserrant une couche de silicate alcalin hydraté de 4mm d'épaisseur. Les deux feuilles étant de même épaisseur, pour obtenir un comportement différencié la feuille 3 est trempée de manière à obtenir des contraintes de surface en compression de l'ordre de 120MPa, et la feuille 4 est trempée de manière à présenter des contraintes de surface de 80MPa.

Par ailleurs pour faire en sorte que la couche intumescente soit suffisamment stable lors de son expansion, on choisit une composition dont la teneur pondérale en eau est de 38%. La composition comprend en outre 4% en poids d'éthylène glycol, 1% en poids d'hydroxy-tétraméthyl ammonium (TMAH). La composition présente un rapport molaire SiO₂/K₂O de 4,6.

La composition utilisée pour former cette couche est constituée à partir d'une suspension de silice colloïdale à 50% en poids de silice. Les particules ont une dimension moyenne de 70nm (commercialisée sous le nom de Klébosol 50R50). Cette suspension est mise en réaction avec une solution concentrée d'hydroxyde de potassium à 50%.

La solution après l'ajout de l'éthylène glycol et du TMAH est en partie déshydratée sous pression réduite à une température ne dépassant pas 60°C jusqu'à obtenir la teneur de 38% en poids d'eau.

La composition préparée reste fluide plus de 4 heures à température ambiante. Elle est avantageusement introduite entre les feuilles de verre par coulée selon la technique habituelle pour les compositions qui se solidifient sans séchage.

Le vitrage en question offre donc simultanément d'une part une couche intumescente qui est suffisamment stable pour jouer son rôle réfractaire, et d'autre part une structure verrière qui garantit contre les défauts lors de la réaction du vitrage à l'épreuve au feu.

La figure 2 présente une structure de vitrage maritime de classe A60 telle que proposée antérieurement. Dans cette classe la performance est établie pour un feu est supposé se produire à l'extérieur, autrement dit dans ces vitrages la feuille de pression 1 est la première sollicitée par les contraintes thermiques. En raison de son épaisseur elle résiste plus longtemps avant de se rompre. Après quoi l'ensemble 7 est lui-même soumis au feu.

Les vitrages antérieurs connus de cette classe sont constitués, en plus de la feuille de pression, d'un ensemble 7 comprenant deux couches intumescentes 11 et 12 et trois feuilles de verre 8, 9 et 10. Cette structure est rendue nécessaire du fait de la résistance limitée offerte par les couches intumescentes à teneur en eau relativement élevée. Comme indiqué précédemment la teneur en eau des vitrages de l'art antérieur est toujours supérieure à 44% en poids et ordinairement est supérieure à 48%.

Le temps de protection dans ces conditions conféré par la première couche intumescente 11 est insuffisant pour atteindre la performance A60.

Dans le déroulement de l'épreuve au feu, après la rupture de la feuille de pression 1, la feuille 10 est rapidement rompue. Pour les raisons indiquées ci-dessus la couche intumescente 11 ne maintient qu'un temps limité la protection uniforme de la feuille de verre 9 sous-jacente. Non seulement la tendance de la couche 11 est de fluer, mais encore la forte teneur en eau conduit par endroit à l'éclatement de bulles de vapeur qui découvrent localement la feuille de verre 9 exposant celle-ci au feu de façon prématurée.

La présence de la deuxième couche intumescente 12 permet de compenser l'insuffisance de performance de la première couche 11 au prix d'un ensemble plus complexe et plus coûteux.

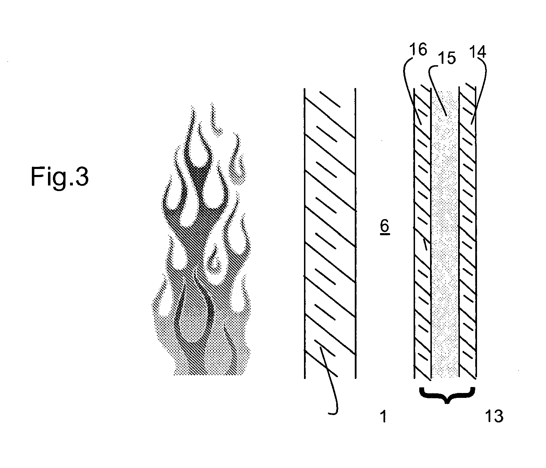

L'utilisation schématisée à la figure 3 pour un vitrage de classe A60 selon l'invention dont le matériau intumescent est suffisamment stable, c'est-à-dire qui ne flue pas à température élevée, notamment en raison d'une teneur en eau plus limitée, permet d'atteindre les performances antérieures avec un ensemble 13 qui ne comporte qu'une seule couche de silicate alcalin hydraté.

Comme précédemment le feu est par hypothèse situé à l'extérieur. Le choc thermique est donc supporté en premier lieu par la feuille de pression 1. Après rupture de celle-ci, comme précédemment encore, la feuille de verre trempée 16 est rapidement brisée sous l'effet du choc thermique, laissant la couche intumescente 15 directement exposée. La formation de la mousse stable crée un écran homogène sur toute la surface de la feuille 14. Dans ces conditions la température de la feuille 14 demeure modérée pendant toute l'évaporation de l'eau de la couche. Après l'évaporation le caractère réfractaire de la mousse retarde la montée en température de la feuille 14.

Le fait que la couche intumescente est pleinement utilisée pour ses propriétés permet de n'utiliser qu'une seule couche là où antérieurement deux couches étaient nécessaires. Le cas échéant la fermeté de cette couche permet d'accroître son épaisseur et d'accentuer encore son rôle protecteur.

Un vitrage maritime de classe A60 est constitué par exemple d'une feuille de pression de 12 mm, de deux feuilles de verre trempées de 6mm d'épaisseur chacune, d'une couche intumescente de 6mm d'épaisseur. Les feuilles de verre présentent une contrainte superficielle de l'ordre de 100MPa.

La composition de la couche intumescente est identique à celle présentée plus haut. Elle renferme une teneur en eau de 38%, 4% d'éthylène glycol, 1% de TMAH et présente un rapport molaire de 4,6. La composition est préparée comme précédemment au moyen d'une suspension de silice colloïdale (Klebosol 50R50) et de solution d'hydroxyde de potassium.

Cette structure est à comparer avec celle de l'art antérieur comprenant en plus de la feuille de pression, un ensemble feuilleté de trois feuilles de verre de 6mm et de deux couches intumescentes de 4mm chacune. Le gain en épaisseur est 8mm et le gain de poids en conséquence.

## Revendications

1. Vitrage anti-feu transparent comprenant au moins un ensemble de deux feuilles de verre trempées entre lesquelles se situe une couche de silicate alcalin hydraté, dans lequel la feuille exposée à une épreuve au feu se brise la première en faisant en sorte que, les feuilles étant de même composition verrière, les contraintes des feuilles trempées soient d'intensité différentes, la feuille exposée la première présentant les contraintes les moins élevées, la différence de contraintes entre les deux feuilles étant d'au moins 10MPa, et de préférence d'au moins 20MPa.

2. Vitrage selon la revendication 1 dans lequel les feuilles sont d'épaisseurs différentes, la feuille exposée la première étant d'épaisseur moindre

3. Vitrage selon la revendication 2, dans lequel la différence d'épaisseur entre les feuilles de verre est d'au moins 15% de celle dont l'épaisseur est la moins élevée, et de préférence d'au moins 20% de cette épaisseur.

4. Vitrage anti-feu selon l'une des revendications précédentes dans lequel la couche de silicate alcalin hydraté est formée par durcissement sans séchage à partir d'une composition fluide, dont la composition est telle qu'exposée au feu elle continue de couvrir la feuille de verre à laquelle elle adhère.

5. Vitrage selon la revendication 4 dans lequel la couche de silicate alcalin hydraté présente une teneur en eau au plus égale à 43% en poids et de préférence au plus égale à 40%.

6. Vitrage selon la revendication 5 dans lequel le rapport molaire silice/ oxyde alcalin de la couche de silicate alcalin hydraté est compris entre 3,5 et 6.

7. Vitrage selon l'une des revendications 4 à 6, dont la silice constitutive de la couche de silicate alcalin provient au moins pour 50% de suspension de silice colloïdale dont les particules ont une dimension supérieure à 40nm et de préférence supérieure à 50nm.

8. Vitrage selon la revendication 7 dans lequel au moins 80% en poids des particules de silice colloïdale ont des dimensions qui se situent dans l'intervalle de ±10% de la dimension moyenne.

9. Vitrage selon l'une des revendications 4 à 8 constituant un vitrage "maritime" de classe A60, comprenant en plus d'une feuille de pression, un ensemble feuilleté formé de deux feuilles de verre trempé encadrant une seule couche intumescente.

## Patentansprüche

1. Lichtdurchlässige Brandschutzverglasung, die mindestens eine Tragekonstruktion mit zwei gehärteten Glasscheiben umfasst, zwischen denen sich eine Alkalisilikathydrat-Schicht befindet, bei der die einer Feuerprüfung ausgesetzte Scheibe zuerst zerspringt und dabei dafür sorgt, dass, da die Scheiben die gleiche Glaszusammensetzung haben, die Stress der gehärteten Scheiben von unterschiedlicher Intensität sind, wobei die zuerst dem Feuer zugekehrte Scheibe die geringsten Stress aufweist, wobei die Differenz der Stress zwischen den beiden Scheiben mindestens 10 MPa beträgt und bevorzugt mindestens 20 MPa.

2. Verglasung nach Anspruch 1, bei der die Scheiben unterschiedliche Dicken aufweisen, wobei die zuerst dem Feuer zugekehrte Scheibe eine geringere Dicke aufweist.

3. Verglasung nach Anspruch 2, bei der die Dickendifferenz zwischen den Glasscheiben zumindest 15 % derjenigen mit der geringeren Dicke und bevorzugt zumindest 20 % dieser Dicke beträgt.

4. Brandschutzverglasung nach einem der vorstehenden Ansprüche, bei der die Alkalisilikathydrat-Schicht durch trocknungsfreies Hartwerden einer flüssigen Zusammensetzung gebildet wird, deren Zusammensetzung dergestalt ist, dass sie, wenn sie dem Feuer ausgesetzt ist, weiterhin die Glasscheibe bedeckt, an der sie haftet.

5. Verglasung nach Anspruch 4, bei der die Alkalisilikathydrat-Schicht einen Wassergehalt von höchstens gleich 43 Gewichtsprozenten und bevorzugt von höchstens gleich 40 % aufweist.

6. Verglasung nach Anspruch 5, bei der das Molverhältnis von Siliziumdioxid/Alkalioxid der Alkalisilikathydrat-Schicht bei zwischen 3,5 und 6 liegt.

7. Verglasung nach einem der vorstehenden Ansprüche 4 bis 6, bei der das bestandteilbildende Siliziumdioxid der Alkalisilikat-Schicht zumindest zu 50 % aus einer Suspension aus kolloidalem Siliciumdioxid stammt, dessen Partikel eine Größe von über 40 nm und bevorzugt über 50 nm aufweisen.

8. Verglasung nach Anspruch 7, bei der zumindest 80 Gewichtsprozent der kolloidalen Siliciumdioxidpartikel Abmessungen haben, die im Intervall von ±10 % der mittleren Abmessung liegen.

9. Verglasung nach einem der vorstehenden Ansprüche 4 bis 8, die eine "maritime" Verglasung der Klasse A60 bildet, die außer einer Druckscheibe ein Sicherheitsensemble umfasst, das aus zwei gehärteten Glasscheiben gebildet wird, die eine einzige Brandschutzschicht umgeben.

## Claims

1. Transparent fire-resistant glazing comprising at least one assembly of two sheets of toughened glass, between which a hydrated alkali metal silicate layer is located, in which the sheet exposed to a fire test breaks first ensuring that, when the sheets are of the same glass composition, the stresses on the toughened sheets differ in intensity, wherein the sheet exposed first exhibits the lowest stresses and the difference in stresses between the two sheets is at least 10 MPa, and preferably at least 20 MPa.

2. Glazing according to claim 1, in which the sheets have different thicknesses, wherein the sheet exposed first has a smaller thickness.

3. Glazing according to claim 2, in which the difference in thickness between the glass sheets is at least 15% of that with the smaller thickness and preferably at least 20% of this thickness.

4. Fire-resistant glazing according to one of the preceding claims, in which the hydrated alkali metal silicate layer is formed by hardening without drying from a fluid composition, the composition of which is such that, when exposed to fire, it continues to cover the glass sheet to which it adheres.

5. Glazing according to claim 4, in which the hydrated alkali metal silicate layer has a water content at most equal to 43% by weight and preferably at most equal to 40%.

6. Glazing according to claim 5, in which the silica/alkali metal oxide molar ratio of the hydrated alkali metal silicate layer ranges between 3.5 and 6.

7. Glazing according to one of claims 4 to 6, wherein the silica forming the alkali silicate layer comes to at least 50% from colloidal silica solution, the particles of which have a dimension greater than 40 nm and preferably greater than 50 nm.

8. Glazing according to claim 7, in which at least 80% by weight of the colloidal silica particles have dimensions lying in the range of ± 10% of the average dimension.

9. Glazing according to one of claims 4 to 8 forming a class A60 "marine" glazing, comprising in addition to a pressure sheet, a laminated assembly formed from two sheets of toughened glass enclosing a single intumescent layer.
